(19) Europäisches Patentamt
European Patent Office
Office européen des brevets

(11) EP 2 194 088 B1

(12) **EUROPEAN PATENT SPECIFICATION**

(45) Date of publication and mention of the grant of the patent:
**31.10.2012 Bulletin 2012/44**

(21) Application number: **08834497.3**

(22) Date of filing: **19.09.2008**

(51) Int Cl.:
***C08J 9/28*** (2006.01) ***B29C 41/12*** (2006.01)
***B29K 1/00*** (2006.01) ***B29L 7/00*** (2006.01)

(86) International application number:
**PCT/JP2008/066947**

(87) International publication number:
**WO 2009/041352 (02.04.2009 Gazette 2009/14)**

(54) **PROCESS FOR PRODUCING POROUS FILM**

HERSTELLUNGSVERFAHREN FÜR PORÖSEN FILM

PROCÉDÉ DE PRODUCTION DE FILM POREUX

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **25.09.2007 JP 2007246656**

(43) Date of publication of application:
**09.06.2010 Bulletin 2010/23**

(73) Proprietor: **FUJIFILM Corporation**
**Tokyo 106-8620 (JP)**

(72) Inventors:
- **YAMAZAKI, Hidekazu**
**Minami-ashigara-shi**
**Kanagawa 250-0193 (JP)**
- **ITO, Koju**
**Minami-ashigara-shi**
**Kanagawa 250-0193 (JP)**
- **IWANAGA, Hiroshi**
**Ashigarakami-gun**
**Kanagawa 258-8538 (JP)**

(74) Representative: **HOFFMANN EITLE**
**Patent- und Rechtsanwälte**
**Arabellastrasse 4**
**81925 München (DE)**

(56) References cited:
**WO-A1-2006/030964**
**GB-A- 1 440 192**
**JP-A- 2006 083 292**
**JP-A- 2007 002 241**
**JP-A- 2007 161 943**
**JP-B1- 4 018 741**
**US-A- 5 308 904**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 194 088 B1

**Description**

Technical Field

The present invention relates to a production method of a porous film having a fine pattern.

Background Art

In recent years, increase in integration degree, higher information density, and higher image definition have been desired more and more in the fields of optics and electronics. Therefore, it is strongly required that a film used in these fields is formed by fine patterning to have a finer structure (fine pattern structure). In a field of regenerative medicine, a film having a fine structure on its surface is effectively used as a material which provides scaffolds for cell culturing.

To such a film having a fine pattern (hereinafter, referred to as porous film), functional fine particles are added, and the film is used as the optical material or the electronic material. For example, there is a porous film used as a polarizing plate having a moth-eye structure for anti-reflection. This porous film has a regular fine pattern of sub-μm to several ten micrometers size. As a popular method for forming this fine pattern, a mask is formed using a micro processing technique like optical lithography, and a pattern of the mask is transferred to a film.

Besides the above-described method, there is another method to form a fine pattern of the film. In this method, a predetermined polymer solution is cast on a support and wet air is made in contact with the casting film on the support to form water drops on a surface of the casting film. Then, the solvent contained in the casting film is firstly dried, and the water drops of the same is secondly dried (Japanese Patent Laid-Open Publication No. 2002-335949). A porous film produced in this method is also referred to as a self-assembled film for its fine pattern formation behavior.

By the way, it is known that a plasticizer is normally added to a polymer solution so as to give flexibility to a polymer film. The plasticizer in the casting film, however, inhibits the formation of water drops aligned regularly in uniform size. Therefore, the plasticizer could not be added to the polymer solution in the method disclosed in Japanese Patent Laid-Open Publication No. 2002-335949. Specifically, the plasticizer may induce the formation of excess nuclei of water drops in sub-μm size which are early in development. The plasticizer may also enhance the growth of water drop nuclei to the extent that the sizes thereof become larger than desired, so that several water drops are connected. In such cases, the pore diameters may become irregular, or the pores may be randomly aligned in a film thickness direction, that is, a multi-layered porous structure may appear, or the pores may be collapsed, thereby deforming the film. Thus, the porous film obtained according to the method disclosed in Japanese Patent Laid-Open Publication No. 2002-335949 is very fragile and hard to be handled, and therefore the fields where this porous film can be used are limited.

WO 2006/030964 concerns a method of producing a porous membrane, the method comprising casting a polymer solution, in which a polymer is dissolved in a mixture of a good solvent, a poor solvent and a non-solvent, over a support, so as to form a casted polymer solution; drying the casted polymer solution, so as to form a cast film; and subjecting the cast film to a phase separation.

JP 2007161943 (A) describes a cellulose ester-based resin composition, which comprises a cellulose ester, a non-cellulose ester thermoplastic resin, a plasticizer for the above cellulose ester and a bleeding inhibitor.

US 5,308,904 concerns a resin composition for a porous film, comprising 100 parts of a polymer, 1 to 100 parts of a specific plasticizer and 100 to 400 parts of a filler.

GB 1,440,192 relates to a flexible microporous film material comprising a foamed plasticized polyvinyl chloride in which at least a major proportion by weight of the plasticizer is a polymeric plasticizer of molecular weight of at least 600, the film having open cells which have a diameter less than the thickness of the film. The film may be made by mixing a liquid, which volatilizes without decomposition with a plastisol comprising polyvinyl chloride and preferably the above plasticizer, casting the mixture in the form of a film and heating the film to volatilize the liquid and gel the plastisol.

Disclosure of Invention

It is an object of the present invention to provide a production method of a porous film that is flexible and easy to be handled.

In order to achieve the above and other object, a production method of a porous film according to the present invention includes the steps of (A) casting a liquid containing an organic solvent, a polymer and a plasticizer which is not less than 0.01 wt.% and not more than 50 wt.% of the polymer onto a support to form a casting film; (B) forming water drops by condensing water vapor from ambient gas on a surface of the casting film; (C) growing the water drops and evaporating the organic solvent contained in the casting film; and (D) evaporating the water drops from the casting film after the step C.

The polymer preferably is cellulose triacetate or cellulose acetate propionate. The plasticizer preferably is one of a phosphate ester compound, a phthalate ester compound and a glycolic acid ester compound.

In the step B, humidified air having a relative velocity to the casting film of not less than 0.02 m/sec and not more than 2 m/sec is preferably applied to the casting film. The step B is preferably performed under the following condition: 3°C ≤ ΔT ≤ 15°C where a dew point of air around the casting film is defined as TD, a surface temperature of the casting film is defined as TS, and a value obtained by subtracting TS from TD is defined as ΔT.

It is preferable that the support contains the above-described polymer, and a porous film is formed of the casting film and the support after the step D. It is also preferable that the casting film after the step D is peeled from the support as a porous film.

A porous film prepared according to the present invention has pores each of whose diameters is not less than 0. 1 μm and not more than 30 μm on a surface thereof and includes a polymer and a plasticizer which is not less than 0.01 wt.% and not more than 50 wt.% of the polymer.

The polymer preferably is cellulose triacetate or cellulose acetate propionate. The plasticizer preferably is one of a phosphate ester compound, a phthalate ester compound and a glycolic acid ester compound. Further, the diameter of each of the pores is preferably not less than 0.1 μm and not more than 1 μm.

A composite material includes a porous film prepared by the method of the invention which has pores each of whose diameters is not less than 0.1 μm and not more than 30 μm on a surface thereof and includes a polymer and a plasticizer which is not less than 0.01 wt.% and not more than 50 wt.% of the polymer; and a film which is provided on one surface of the porous film and contains same polymer as the porous film.

According to the production method of a porous film of the present invention, a liquid containing an organic solvent, a polymer and a plasticizer which is not less than 0.01 wt.% and not more than 50 wt.% of the polymer is cast onto a moving support to form a casting film. Owing to this, a porous film that is flexible and easy to be handled, and a composite material having this porous film can be produced.

Brief Description of Drawings

Figure 1 is a process chart illustrating a summary of a film production process of the present invention;
Figures 2 are explanatory views illustrating a state where a porous film of the present invention is formed;
Figure 3 is a plan view illustrating a first porous film of the present invention;
Figure 4 is a cross-sectional view taken along the line IV-IV in Fig. 3;
Figure 5 is a cross-sectional view taken along the line V-V in Fig. 3;
Figure 6 is a cross-sectional view of a second porous film;
Figure 7 is a cross-sectional view of a third porous film;
Figure 8 is a schematic view of a first film production apparatus of the present invention;
Figure 9 is a schematic view of a second film production apparatus of the present invention;
Figure 10 is a schematic view of a third film production apparatus of the present invention; and
Figure 11 is a cross-sectional view of a fourth porous film obtained in the third porous film production apparatus.

Best Mode for Carrying Out the Invention

As shown in Fig. 1, a film production process 10 includes a casting step 12, a water drop forming step 13, a water drop growing step 14 and a water drop evaporating step 15. In the casting step 12, a solution 11 containing a polymer, an organic solvent and a plasticizer is cast onto a support 21 to form a casting film (Fig. 2A). There are two casting methods: one is to put the solution 11 on a static support and spread the solution 11 thereon, and the other is to flow the solution 11 out of a casting die onto a moving support, and either method can be applied in the present invention. The former is generally preferable in producing various kinds of films in small amounts, and the latter is generally preferable in producing films in large amounts. In the latter method, a long porous film can be produced by continuously flowing the solution 11, or a number of porous films each having a predetermined length can be serially produced by intermittently flowing the solution 11, that is, by repeating on/off of the casting at specified time intervals from the casting die.

The water drop forming step 13 aims a so-called nucleation for forming water drops 25 on a surface of a casting film 22 formed in the casting step 12 by condensing water vapor from ambient gas, as shown in Figs. 2A and 2B. The water drops 25 at this point are too small to be visible to the naked eye. Next, in the water drop growing step 14, the water drops 25 are gradually grown. The water drop growing step 14 aims a so-called nuclear growth for growing the extremely small water drops 25 formed or generated in the water drop forming step 13. An organic solvent 26 contained in the casting film 22 is evaporated at least either during or after the growing step of the water drops 25. Owing to the growth of the water drops 25 and the evaporation of the organic solvent 26, the water drops 25 get in to the casting film 22, as shown in Fig. 2C. Note that a condensate of other compounds can be used instead of the water drops 25 formed

by the condensation.

As shown in Fig. 2D, in the water drop evaporating step 15, the water drops 25, as they have grown to a desired level, are evaporated from the casting film 22 into vapor 27. If the organic solvent 26 remains in the casting film 22, the water drops 25 are evaporated after the organic solvent 26 is evaporated as much as possible. The casting film 22 after the water drop evaporating step 15 is peeled from the support 21 as a porous film 17. In this way, the porous film 17 can be obtained from the solution 11 in the film production process 10 (see Fig. 1).

As shown in Fig. 3, pores 31 are formed on the surfaces of the porous film 17. The pores 31 are regularly aligned and have substantially uniform shapes and sizes. The pores formed on the porous film of the present invention may penetrate or get through the porous film, like the pores 31 of the porous film 17 shown in Figs. 4 and 5, or may be formed only on one surface of the porous film, like pits 33a of a porous film 33 shown in Fig. 6 and pits 34a of a porous film 34 shown in Fig. 7. Here, a diameter of each opening at the surface of the porous films 17, 33 and 34 is defined as an opening diameter AP1, and a maximum diameter of each pore 31, pit 33a and pit 34a is defined as a diameter AP2. In the porous films 17 and 34, the opening diameters AP1 are smaller than the diameters AP2 of the pore 31 and the pit 34a, respectively. In the porous film 33, the opening diameter AP1 is equal to the diameter AP2 of the pit 33a as shown in Fig. 6. The porous film of the present invention includes both of the above cases. Therefore, the porous film of the present invention includes the porous films 17, 33 and 34 shown in Figs. 3 to 7.

The pits 33a and 34a are individually formed in the porous films 33 and 34, respectively. However, the present invention is not limited to this configuration. In the present invention, for example, the porous film (not shown) may be formed to have connected pits, that is, a center-to-center distance D between the adjacent two pits can be smaller than the opening diameter AP1 or the diameter AP2. The alignment or arrangement of the pores 31 or the pits 33a and 34a varies depending on the size of the water drops, density in the distribution of the formed water drops, kinds of liquid drops to be formed, drying speed, solid content concentration in the solution, timing of evaporation of the organic solvent 26 with respect to the degree of water drop growth in the water drop growing step, and the like in the film production process 10.

The configurations of the porous films 17, 33 and 34 produced according to the present invention are not specifically limited, however, the present invention is effective in producing the porous films 17, 33 and 34 having thicknesses L1 of not less than 0.05 μm and not more than 100 μm. The present invention is especially effective in producing the porous film 17 having pores 31 each of whose diameters D1 is not less than 0.05 μm and not more than 100 μm and the center-to-center distance L2 between the adjacent two pores 31 is not less than 0.1 μm and not more than 120 μm. The opening diameter AP1 is preferably not less than 0.1μ m and not more than 30 μm, more preferably not less than 0.1 μm and not more than 20 μm, and further more preferably not less than 0.1 μm and not more than 1 μm. When the opening diameter AP1 is not less than 0.1 μm and not more than 1 μm, the porous film exerts an anti-reflection effect, and therefore the porous film can be used as an anti-reflection film.

Hereinafter, production of the porous film 17 is explained as an example of the present invention. The porous films 33 and 34 are produced in substantially same manner as the porous film 17, and therefore the production methods thereof are omitted.

[Material]

Although cellulose acylate is used as a polymer in this embodiment, the polymer of the present invention is not limited to the cellulose acylate. Especially preferable cellulose acylate is triacetyl cellulose (TAC). In the cellulose acylate, it is preferable that the degree of the acyl substitution for hydrogen atoms in hydroxyl groups in cellulose satisfies all of the following formulae (I) to (III):

$$\text{(I)}\quad 2.5 \leq A+B \leq 3.0$$

$$\text{(II)}\quad 0 \leq A \leq 3.0$$

$$\text{(III)}\quad 0 \leq B \leq 2.9$$

In the above formulae (I) to (III), "A" represents a degree of substitution of the hydrogen atom in the hydroxyl group to the acetyl group in cellulose, while "B" represents a degree of substitution of the hydrogen atom in the hydroxyl group to the acyl group with 3 to 22 carbon atoms in cellulose. Preferably, at least 90 wt.% of TAC particles has a

diameter in the range of 0.1 mm to 4 mm, respectively.

Cellulose has glucose units making β-1,4 bond, and each glucose unit has a liberated hydroxyl group at second, third, and sixth positions. Cellulose acylate is a polymer in which a part of or the whole of the hydroxyl groups are esterified so that the hydrogen is substituted by the acyl group with two or more carbons. The degree of substitution for the acyl groups in cellulose acylate means a degree of esterification of the hydroxyl group at each of the second, the third, and the sixth positions in cellulose (when the whole (100%) of the hydroxyl group at the same position is substituted, the degree of substitution at this position is 1).

The total degree of substitution for the acyl groups, namely DS2+DS3+DS6, is preferably in the range of 2.00 to 3.00, more preferably in the range of 2.22 to 2.90, and most preferably in the range of 2.40 to 2.88. In addition, DS6 / (DS2+DS3+DS6) is preferably at least 0.28, more preferably at least 0.30, and most preferably in the range of 0.31 to 0.34. Note that DS2 is the degree of substitution of the hydrogen atom in the hydroxyl group at second position per glucose unit to the acyl group (hereinafter, referred to as a degree of acyl substitution at second position), DS3 is the degree of substitution of the hydrogen atom in the hydroxyl group at third position per glucose unit to the acyl group (hereinafter, referred to as a degree of acyl substitution at third position), and DS6 is the degree of substitution of the hydrogen atom in the hydroxyl group at sixth position per glucose unit to the acyl group (hereinafter, referred to as a degree of acyl substitution at sixth position).

In the present invention, the kind of the acyl groups in cellulose acylate can be one or more. When two or more kinds of acyl groups are in cellulose acylate, it is preferable that one of them is the acetyl group. When a total degree of substitution of the hydroxyl group at the second, the third, and the sixth positions to the acetyl groups and that to acyl groups other than acetyl groups are described as DSA and DSB, respectively, the value of DSA+DSB is preferably in the range of 2.22 to 2.90, and more preferably in the range of 2.40 to 2.88. In addition, the DSB is preferably at least 0.30, and more preferably at least 0.7. In the DSB, the percentage of the substitution of the hydroxyl group at the sixth position is at least 20%, preferably at least 25%, more preferably at least 30%, and most preferably at least 33%. Furthermore, the value of DSA+DSB, in which the hydroxyl group is at the sixth position in cellulose acylate, is preferably at least 0.75, more preferably at least 0.80, and most preferably at least 0.85. By using such cellulose acylate that satisfies the above conditions, a solution (dope) with excellent solubility can be prepared. Especially, since using a non-chlorine organic solvent enables production of excellent solution, it is possible to produce the solution with low viscosity and excellent filterability.

Cellulose as a material of cellulose acylate may be obtained from either linter or pulp.

The acyl group having at least 2 carbon atoms in cellulose acylate is not limited particularly, and may be either an aliphatic group or an aryl group. Examples of the acyl group are alkylcarbonyl ester of cellulose, alkenylcarbonyl ester of cellulose, aromatic carbonyl ester of cellulose, and aromatic alkylcarbonyl ester of cellulose, and each of them may have further substituents. Exemplary substituents are a propionyl group, a butanoyl group, a pentanoyl group, a hexanoyl group, an octanoyl group, a decanoyl group, a dodecanoyl group, a tridecanoyl group, a tetradecanoyl group, a hexadecanoyl group, an octadecanoyl group, an iso-butanoyl group, a t-butanoyl group, a cyclohexane carbonyl group, an oleoyl group, a benzoyl group, a naphthyl carbonyl group, and a cinnamoyl group. Preferable substituents among these are the propionyl group, the butanoyl, group, the dodecanoyl group, the octadecanoyl group, the t-butanoyl group, the oleoyl group, the benzoyl group, the naphthyl carbonyl group, and the cinnamoyl group, and especially preferable substituents among these are the propionyl group and the butanoyl group. Note that a term CAP (cellulose acetate propionate) is used for the polymer in which the acyl group with the value B is propionyl group and a term CAB (cellulose acetate butyrate) is used for the polymer in which the acyl group with the value B is a butyryl group.

When using CAP or CAB as cellulose acylate, the above described condition (III) is preferably in the range of $1.25 \leq B \leq 3.0$, more preferably in the range of $1.3 \leq B \leq 2.97$, and most preferably in the range of $1.4 \leq B \leq 2.97$.

The polymer as a main component of the porous film 17 may be chosen according to intended use of the porous film 17, but preferably has a number average molecular weight (Mn) of 10,000 to 10,000,000, and more preferably of 50,000 to 1,000,000.

The polymer used in the present invention is not limited to cellulose acylate. As examples of the polymer to be used in the present invention other than cellulose acylate, there are vinyl polymer (for example, polyethylene, polypropylene, polystyrene, polyacrylate, polymethacrylate, polyacrylamide, polymethacrylamide, polyvinyl chloride, polyvinylidene chloride, polyvinylidene fluoride, polyhexafluoropropene, polyvinyl ether, polyvinyl carbazole, polyvinyl acetate, polytetrafluoroethylene, and the like), polyester (for example, polyethylene terephthalate, polyethylene naphthalate, polyethylene succinate, polybutylene succinate, polylactic acid, and the like), polylactone (for example, polycaprolactone, and the like), polyamide or polyimide (for example, nylon, polyamic acid, and the like), polyurethane, polyurea, polybutadiene, polycarbonate, polyaromatics, polysulfone, polyethersulfone, polysiloxane derivative, and the like. These polymers may be used in the form of homopolymer, and also be used as copolymer, polymer blend, or polymer alloy, in view of solubility, optical physical properties, electric physical properties, film strength, elasticity, and the like.

Amphiphilic compounds may be used as the material or the additive of the porous film 17. The amphiphilic compound is a compound with hydrophilic and hydrophobic groups.

[Amphiphilic compound]

As an example of the amphiphilic compound, there is polyacrylamide. As the other examples of the amphiphilic compoud, there are a compound which has a main chain of polyacrylamide, a lipophilic side chain of dodecyl group, and a hydrophilic side chain of carboxyl group, block copolymer of polyethylene glycol / polypropylene glycol, and the like. The lipophilic side chain is group which has nonpolar normal (linear) chain such as alkylene group, phenylene group, and the like, and preferably has a structure in which hydrophilic group such as polar group or ionic dissociative group is not divided until the end of the chain, except linking group such as ester group and amide group. The lipophilic side chain preferably has, for example, at least five methylene units if it is composed of alkylene group. The hydrophilic side chain preferably has a structure having hydrophilic part such as polar group, ionic dissociative group, or oxyethylene group on the end through a linking part such as alkylene group.

The amphiphilic compound is not only a monomer such as many sorts of commercially available surfactants but also an oligomer such as a dimer and a trimer, and a polymer. When the amphiphilic compound and the cellulose acylate are mixed, water drops are more easily formed on an exposed surface of the casting film. Further, when the dispersion condition of the cellulose acylate is controlled, the positions for forming the water drops can be more easily adjusted. When the cellulose acylate and the amphiphilic compound are mixed to be used, a weight ratio of the amphiphilic compound to the cellulose acylate is preferably in the range between 0.1 % or more to 20 % or less. Thus, the sizes of the formed water drops tend to be uniform, and it becomes easy to obtain a porous film having the uniform pores. If the weight ratio of the amphiphilic compound to the cellulose acylate is less than 0.1 %, the effect of adding the amphiphilic compounds is too low, and therefore the water drops are unstably formed. Thus, the water drops become uneven in size in some cases. In contrast, if the weight ratio of the amphiphilic compound to the cellulose acylate is more than 20 %, the strength of the porous film becomes lower in some cases since the amphiphilic compound has low-molecular weight.

In the amphiphilic compound to be mixed with the cellulose acylate, a ratio of the number of hydrophilic group to the number of hydrophobic group is preferably in the range of 0.1 / 9.9 to 4.5 / 5.5. Thus, the more fine water drops can be formed on the casting film 22 more densely. If the ratio of the number of hydrophilic group to the number of hydrophobic group does not satisfy the above range, the sizes of the pores vary widely, and concretely, a variation coefficient (unit: %) of the porous diameter that is determined as { (standard deviation of porous diameter) / (average of porous diameter)} $\times$ 100 becomes 10 % or more in some cases. Further, if the ratio of the number of hydrophilic group to the number of hydrophobic group does not satisfy the above range, it sometimes becomes hard to arrange the pores regularly.

Preferably, at least two sorts of the amphiphilic compounds different form each other are used since it becomes possible to control the position and the size of the water drops. In addition, preferably, at least two sorts of the polymers different from each other are used, such that the same effects as described above can be achieved.

[Organic solvent]

Examples of the organic solvent are aromatic hydrocarbon (for example, benzene, toluene, and the like), halogenated hydrocarbon (for example, dichloromethane, chlorobenzene, carbon tetrachloride, 1-bromopropane, and the like), cyclohexane, ketone (for example, acetone, methyl ethyl ketone, and the like), ester (for example, methyl acetate, ethyl acetate, propyl acetate, and the like) and ether (for example, tetrahydrofuran, methyl cellosolve, and the like).

In the present invention, the organic solvent may be a single sort of the above compound or may have several sorts of the above compounds mixed as the solvent. In addition, alcohol or the like may be added to the compound or the mixture of the compounds.

By the way, use of an organic solvent containing no dichloromethane has recently been studied for the sake of minimizing the adverse effect on the environment. To accomplish this, ether with 4 to 12 carbon atoms, ketone with 3 to 12 carbon atoms, ester with 3 to 12 carbon atoms, brominated hydrocarbon such as 1-bromopropane, or the like is preferably used. A mixture of these chemical agents may be used instead. For example, a mixed organic solvent of methyl acetate, acetone, ethanol and n-butanol is available. These ether, ketone, ester and alcohol may have cyclic structure. A compound having any two or more functional groups of ether, ketone, ester and alcohol (that is, -O-, -CO-, -COO- and -OH-) is available as the solvent.

When two or more sorts of compounds different from each other are used as the solvent, appropriately varying the proportion of compounds makes it possible to control the formation speed of the water drops 25, the depth of the water drops 25 got in to the casting film 22, and the like.

[Additive]

Various additives (for example, peeling agents, plasticizers, UV inhibitors, deterioration inhibitors, micro powders, optical anisotropy controllers, etc.) may be added to the solution of the present invention in accordance with their use.

[Plasticizer]

As the preferable plasticizers of the present invention, phosphoric acid esters and carboxylic acid esters are used. Examples of the phosphoric acid esters include triphenyl phosphate (TPP), tricresyl phosphate (TCP), cresyl diphenyl phosphate, octyl diphenyl phosphate, diphenyl biphenyl phosphate (BDP), trioctyl phosphate and tributyl phosphate. Representative carboxylic acid esters are phthalate esters and citrate esters. Examples of the phthalate esters include dimethyl phthalate (DMP), dimethoxyethyl phthalate, diethyl phthalate (DEP), dibutyl phthalate (DBP), dioctyl phthalate (DOP), diphenyl phthalate (DPP) and diethylhexyl phthalate (DEHP). Examples of the citrate esters include O-acetylcitric acid triethyl ester (OACTE), O-acetylcitric acid tributyl ester (OACTB), acetyl triethyl citrate and acetyl tributyl citrate.

Other examples of the carboxylic acid ester include butyl oleate, methyl acetyl ricinolate, dibutyl sebacate, and various trimellitic acid esters. Examples of the glycolic acid ester include triacetin, tributyrin, butyl phthalyl butyl glycolate, ethyl phthalyl ethyl glycolate, methyl phthalyl ethyl glycolate, butyl phthalyl butyl glycolate, methyl phthalyl methyl glycolate, propyl phthalyl propyl glycolate, butyl phthalyl butyl glycolate, and octyl phthalyl octyl glycolate. Among these, triphenyl phosphate, tricresyl phosphate, cresyl diphenyl phosphate, tributyl phosphate, dimethyl phthalate, diethyl phthalate, dibutyl phthalate, dioctyl phthalate, diethylhexyl phthalate, triacetin, and ethyl phthalyl ethyl glycolate are preferable. Triphenyl phosphate, diethyl phthalate, and ethyl phthalyl ethyl glycolate are especially preferable.

In addition, oligomers can also be used as the plasticizer. Preferable oligomers are styrene oligomer, acrylic oligomer and polyester oligomer. Compounds represented by the following general formulae (I) and (II) of Chemical Formula 1 are respectively the styrene oligomer and the acrylic oligomer.

[Chemical Formula 1]

(I)

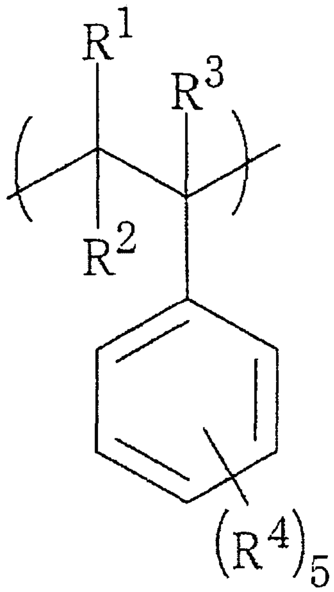

(II)

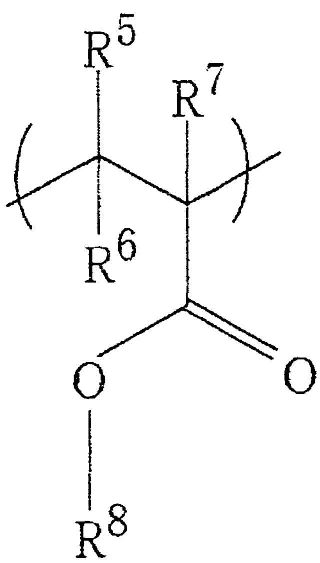

The general formula (I) of Chemical Formula 1 is a structure unit obtained from aromatic vinyl type monomers. Examples of the aromatic vinyl type monomers include styrene; alkyl substituted styrene type such as α-methylstyrene, β-methylstyrene and p-methylstyrene; halogen substituted styrene type such as 4-chlorostyrene and 4-bromostyrene; hydroxystyrene type such as p-hydroxystyrene, α-methyl-p-hydroxystyrene, 2-methyl-4-hydroxystyrene and 3,4-dihydroxystyrene; vinylbenzyl alcohol type; alkoxy substituted styrene type such as p-methoxystyrene, p-t-butoxystyrene and m-t-butoxystyrene; vinyl benzoic acid type such as 3-vinyl benzoic acid and 4-vinyl benzoic acid, benzoic acid vinyl ester type such as methyl-4-vinylbenzoate and ethyl-4-vinylbenzoate; 4-vinylbenzyl acetate; 4-acetoxystyrene; amide styrene type such as 2-butylamide styrene, 4-methylamide styrene and p-sulfonamide styrene; amino styrene type such

as 3-amino styrene, 4-amino styrene, 2-isopropenyl aniline and vinylbenzyl dimethylamine; nitrostyrene type such as 3-nitrostyrene and 4-nitrostyrene; cyanostyrene type such as 3-cyanostyrene and 4-cyanostyrene; vinylphenyl acetonitrile; aryl styrene type such as phenyl styrene; and indene type. However, the present invention is not limited to these specific examples. Two or more sorts of these monomers may be used as copolymer component. Among these, styrene and α-methylstyrene are preferable in view of industrial availability and cost.

The general formula (II) of Chemical Formula 1 is a structure unit obtained from acrylic ester type monomers. Examples of the acrylic acid ester type monomers include methyl acrylate, ethyl acrylate, i-propyl acrylate, n-propyl acrylate, n-butyl acrylate, i-butyl acrylate, s-butyl acrylate, t-butyl acrylate, n-pentyl acrylate, i-pentyl acrylate, s-pentyl arylate, n-hexyl acrylate, i-hexyl acrylte, n-heptyl acrylte, i-heptyl acrylate, n-octyl acrylte, i-octyl acrylate, n-nonyl acrylte, i-nonyl acrylate, n-myristyl acrylate, i-myristyl acrylate, 2-ethylhexyl acrylte, ε-caprolactone acrylate, 2-hydroxyethyl acrylate, 2-hydroxypropyl acrylate, 3-hydroxypropyl acrylate, 4-hydroxybutyl acrylate, 2-hydroxybutyl acrylate, 2-methoxyethyl acrylate, 2-ethoxyethyl acrylate, phenyl acrylate, phenyl methacrylate, 2-chlorophenyl acrylate or 4-chlorophenyl acrylate, 2-chlorophenyl methacrylate or 4-chlorophenyl methacrylate, 2-ethoxyl carbonyl phenyl acrylate or 3-ethoxyl carbonyl phenyl acrylate or 4-ethoxyl carbonyl phenyl acrylate, 2-ethoxyl carbonyl phenyl methacrylate or 3-ethoxyl carbonyl phenyl methacrylate or 4-ethoxyl carbonyl phenyl methacrylate, o-tolyl acrylate or m-tolyl acrylate or p-tolyl acrylate, benzyl acrylate, benzyl methacrylate, phenethyl acrylate, phenethyl methacrylate, 2-naphthyl acrylate, cyclohexyl acrylate, cyclohexyl methacrylate, 4-methylcyclohexyl acrylate, 4-methylcyclohexyl methacrylate, 4-ethylcyclohexyl acrylate, 4-ethylcyclohexyl methacrylate, and the like. In addition, the above acrylic esters can be replaced by metacrylic esters. However, the present invention is not limited to these specific examples. Two or more sorts of these monomers may be used as copolymer component. Among these, methyl acrylate, ethyl acrylate, i-propyl acrylate, n-propyl acrylate, n-butyl acrylate, i-butyl acrylate, s-butyl acrylate, t-butyl acrylate, n-pentyl acrylate, i-pentyl acrylate, s-pentyl arylate, n-hexyl acrylate, i-hexyl acrylte, or the acrylic esters replaced by methacrylic esters are preferable in view of industrial availability and cost.

In the present invention, polymers can also be used as the plasticizer. Examples of polyester resin used as polyester polymer are those obtained by condensation reaction of dicarboxylic acid (or its ester-forming derivative) and diol (or its ester-forming derivative) and/or hydroxycarboxylic acid (or its ester-forming derivative) as main materials.

Examples of the above dicarboxylic acid are aromatic dicarboxylic acid such as terephthalic acid, isophthalic acid, phthalic acid, 2,6-naphthalenedicarboxylic acid, bis(carboxyphenyl)methane, anthracenedicalboxylic acid, 4,4'-diphenyl ether dicalboxylic acid, 4,4'-biphenyldicalboxylic acid, sodium 5-sulfoisophthalate; aliphatic dicarboxylic acid such as adipic acid, sebacic acid, azelaic acid, dodecanedione acid; alicyclic dicarboxylic acid such as 1,3-cyclohexanedicarboxylic acid; and their ester-forming derivatives. Two or more sorts of dicarboxylic acids can be used.

Examples of the above dioh are aliphatic glycol having 2 to 20 carbon atoms, specifically, ethylene glycol, triethylene glycol, 1,4-butanediol, neopentyl glycol, 1,5-pentanediol, 1,6-hexanediol, decamethylene glycol, cyclohexane dimethanol, cyclohexane diol; long-chain glycol having a molecular weight of 400 to 6000, specifically, polyethylene glycol, poly trimethylene glycol, poly tetramethylene glycol; and their ester-forming derivatives. Two or more sorts of diols can be used.

Examples of the polymer and copolymer are polybutylene terephthalate, polybutylene (terephthalate/isophthalate), polybutylene (terephthalate/adipate), polytrimethylene terephthalate, polypropylene (terephthalate/isophthalate), polyethylene terephthalate, polyethylene (terephthalate/isophthalate), polyethylene (terephthalate/adipate), bisphenol A (terephthalate/isophthalate), polybutylene naphthalate, polybutylene (terephthalate/isophthalate), polypropylene naphthalate, polyethylene naphthalate, polycyclohexane dimethylene terephthalate, polycyclohexane dimethylene (terephthalate/isophthalate) poly (cyclohexane dimethylene/ethylene) terephthalate, poly (cyclohexane dimethylene/ethylene) (terephthalate/isophthalate), and the like.

In addition, thermotropic liquid crystalline thermoplastic polyester resin formed of structure units selected from among aromatic oxycarbonyl unit, aromatic dioxycarbonyl unit, aromatic dicarbonyl unit, ethylenedioxy unit and the like may also be used.

The aromatic oxycarbonyl unit here includes a structure unit generated from p-hydroxybenzoate, 6-hydroxy-2-naphthoic acid or 4'-hydroxydiphenyl-4-calboxylic acid. The aromatic dioxycarbonyl unit here includes a structure unit generated from 4,4'-dihydroxybiphenyl, hydroquinone or t-butylhydroquinone. The aromatic dicarbonyl unit here includes a structure unit generated from terephthalic acid, isophthalic acid or 2,6-naphthalenedicarboxylic acid. An aromatic iminooxy unit includes, for example, a structure unit generated from 4-aminophenol. Specific examples thereof are thermotropic liquid crystalline polyesters such as p-oxybenzoate/polyethylene terephthalate and p-oxybenzoate/6-oxy-2-naphthoic acid.

The plasticizer to be used may be of one sort, or two or more sorts. In order to improve flexibility and usability of the obtained porous film, an additive amount of the plasticizer to the polymer is preferably 0.01 wt.% or more and 50 wt.% or less, more preferably 1 wt.% or more and 40 wt.% or less, and further more preferably 1 wt.% or more and 30 wt.% or less. If the additive amount of the plasticizer is less than 0.01 wt.%, the effect of adding the plasticizer cannot be obtained and the porous film becomes hard to be easily broken or fractured, so that the porous film cannot be handled

with ease. In contrast, if the additive amount of the plasticizer is more than 50 wt.%, the polymer loses its property and the porous film becomes brittle, or the porous film loses its self-supporting property due to the loss of firmness. In both cases, the usability of the porous film is lowered which is not preferable.

[Solution]

The above polymer as a material is dissolved in the organic solvent, and thereby the solution 11 is obtained. The polymer contained in the solution 11 is preferably 0.02 pts.wt. or more and 30 pts.wt. or less per 100 pts.wt. of organic solvent. Owing to this, a high-quality porous film can be productively manufactured. If the content of the polymer is less than 0.2 pts.wt. per the 100 pts.wt. of organic solvent, the proportion of the solvent in the solution is too high, and therefore the evaporation process may take longer, which lowers the productivity of the film. In contrast, if the content of the polymer is more than 30 pts.wt. per the 100 pts.wt. of organic solvent, the water drops formed by the condensation cannot deform the solution in the casting film, which may make the porous film uneven.

As the viscosity of the solution 11 increases, it lowers fluidity of the water drops formed by the condensation. On the other hand, as the viscosity of the solution 11 decreases, the water drops are more likely to join together, so that the diameters of the pores become uneven. When the viscosity is controlled within the range between 0.1 mPa·s or more to 1000 mPa·s or less, a porous film having more uniform pore diameters can be produced. It is more preferable to control the viscosity within the range between 1 mPa·s or more to 100 mPa·s or less. If the viscosity of the solution 11 is less than 0.1 mPa·s, any water drops may join together, which may cause the opening diameters AP1 and the diameters AP2 to be uneven. In contrast, if the viscosity of the solution 11 is more than 1000 mPa·s, the water drops may become out of alignment and lose their regularity.

It is preferable that the solution 11 is preliminary filtrated before being sent to a film production apparatus 41. Owing to this, foreign substances are prevented from getting into the porous film 17. The filtration is preferably performed for several times. When the filtration is performed twice for example, a filtration device in an upstream side (not shown) is preferably provided with a filter having an absolute filtration accuracy (absolute filtration pore diameter) greater than the diameters of the pores of the porous film 17, and a filtration device in a downstream side (not shown) is preferably provided with a filter having an absolute filtration accuracy smaller than the pores of the porous film 17.

[Porous film production apparatus]

As shown in Fig. 8, the porous film production apparatus 41 has a casting chamber 43. The casting step 12, the water drop forming step 13, the water drop growing step 14 and the water drop evaporating step 15 (all of these are shown in Fig. 1) are performed in the casting chamber 43. The organic solvent which is evaporated into vapor in the casting chamber 43 is condensed in a condenser (not shown) and then refined in a refining device (not shown) disposed outside the casting chamber 43 to be reused. In this embodiment, the casting chamber 43 includes a first area 46 for performing the casting step 12 and the water drop forming step 13 (see Fig. 1), a second area 47 for performing the water drop growing step 14 (see Fig. 1) and a third area 48 for performing the water drop evaporating step 15 (see Fig. 1). Although the first to third areas 46 to 48 are integrated in the casting chamber 43, the areas may be provided independently. In this case, however, the first area 46 and the second area 47 are preferably provided close to each other as much as possible. By passing through the above-described first to third areas 46 to 48, the porous film 17 is obtained from the casting film 22.

The endless belt 51 used as a support is bridged over rollers 52 and 53 provided in the casting chamber 43. A casting die 56 is disposed, in the first area 46, above the endless belt 51. At least one of the rollers 52 and 53 is rotated by a not-shown driving device. Owing to the rotation of the rollers 52 and 53, the endless belt 51 runs through the first to third areas 46 to 48. The rollers 52 and 53 are connected to a temperature controller 54. The temperature controller 54 controls the temperatures of the rollers 52 and 53. The temperature of the endless belt 51, which is in contact with the rollers 52 and 53, is kept in a desired range by controlling the temperatures of the rollers 52 and 53.

The endless belt 51 preferably has a thermal conductivity k and a thickness L satisfying the following condition: $100\ W/(m^2 \cdot K) \le k/L \le 100000\ W/(m^2 \cdot K)$. The thickness L is preferably not less than 0.05 mm and not more than 10 mm. Owing to this, more speedy and accurate temperature control can be made. The endless belt 51 having such configuration is efficient especially in a case where the condition of the air around the casting film 22 cannot instantly be changed. When the value of k/L is smaller than $100\ W/(m^2 \cdot K)$, the thermal conductivity of the endless belt 51 is low, and therefore the endless belt 51 cannot respond well to the temperature change thereof. As a result, the temperature of the casting film 22 cannot be controlled well, so that the opening diameters and the diameters cannot be made to have predetermined values. When the value of k/L is larger than $100000\ W/(m^2 \cdot K)$, unevenness in heat transfer of the temperature controller 54, that is, unevenness in heat control accuracy may instantly influence on the casting film 22, which may result in irregularity of the opening diameters and diameters.

On the endless belt 51 may be provided a flat plate or a flexible sheet as a second support, and the casting

film may be formed thereon. Meanwhile, the flat plate or the flexible sheet may be substituted for the endless belt 51. In this case, the flat plate or the flexible sheet preferably has Peltier module. Such flat plate or flexible sheet is placed on a member which has a flat face and is capable of controlling its temperature, and thereby the temperature of the flat plate or the temperature of the flexible sheet can be controlled with a high degree of accuracy.

The casting die 56 casts the solution 11 onto the endless belt 51 passing through the first area 46. The solution 11 cast on the endless belt 51 becomes the casting film 22. In the first area 46, an air feeding/sucking unit 61 is disposed above a moving path of the casting film 22. The air feeding/sucking unit 61 has an outlet 61a through which humidified air is fed at the vicinity of the casting film 22, and an inlet 61b through which gas or ambient air around the casting film 22 is sucked. The air feeding/sucking unit 61 is also provided with a blower controller (not shown) for independently controlling temperature, dew point, humidity and wind speed of the humidified air fed from the air feeding system as well as a suction force of the air sucking system. The outlet 61a is provided with a filter for keeping a dust level, that is, a cleanliness of the humidified air. Two or more air feeding/sucking units 61 may be arranged in the moving direction of the endless belt 51.

Here, a value $\Delta T$ (unit: °C) is obtained by subtracting TS from TD (TD-TS) in which TD represents the dew point of the humidified air fed from the outlet 61a. At least one of a surface temperature TS and the dew point TD is controlled so that $\Delta T$ satisfies the following condition (1). TS which represents the surface temperature of the casting film 22 can be measured by, for example, a non-contact thermometer such as a commercially available infrared thermometer disposed near the casting film 22. When $\Delta T$ is less than 3°C, the water drops are hardly generated. On the other hand, when $\Delta T$ is more than 15°C, the water drops may be generated suddenly. In this case, the water drops become uneven in size, and otherwise, the water drops, which should be arranged two dimensionally, that is, in a plane, are arranged three dimensionally in which the water drops overlap with each other. In the first area 46, the value $\Delta T$ is preferably changed from a larger value to a smaller value. Owing to this, generation speed of the water drops or sizes of the generated water drops can be controlled, and thereby forming the water drops with uniform diameters in two dimensional arrangement, that is, in a plane direction of the casting film 22.

$$3^\circ C \leq \Delta T \leq 15^\circ C \quad \ldots (1)$$

Although the surface temperature TS of the casting film 22 is controlled using the endless belt 51 and a temperature control plate (not shown) opposed the endless belt 51 in the first area 46, the surface temperature TS can be controlled using either one of them. The dew point TD can be controlled by adjusting the conditions of the humidified air fed from the air feeding/sucking unit 61.

Air feeding/sucking units 63 and 64 are disposed in this order along the moving path of the casting film 22 in the second area 47. The air feeding/sucking unit 63 is disposed in the downstream side from and adjacent to the air feeding/sucking unit 61 disposed in the first area 46 so as to uniformly grow (or develop) the water drops formed in the first area 46. As the distance between the first area 46 and the second area 47 is increased, that is, as the time required for the generated water drops to enter the second area 47 becomes longer, the sizes of the water drops after completely grown become less uniform. The number of the air feeding/sucking units is not limited to two that is adopted in this embodiment, but may be one, or three or more. Although the structure of each of the air feeding/sucking units 63 and 64 is the same as that of the air feeding/sucking unit 61, it is not limited thereto.

In the second area 47, at least one of the surface temperature TS and the dew point TD is controlled so that $\Delta T$ satisfies the following condition (2). The surface temperature TS is mainly controlled by a temperature control plate (not shown). This temperature control plate basically has the same configuration as the temperature control plate in the first area 46, and is capable of changing temperature thereof in the moving direction of the endless belt 51. The dew point TD can be controlled by adjusting the conditions of the humidified air fed from the outlet 63a. In the second area 47, the surface temperature TS of the casting film 22 can be measured by providing a thermometer like the one described above, near the casting film 22. When the conditions of the second area 47 are set as such, the water drops can be gradually grown and the arrangement of the water drops can be enhanced due to capillary force, and thereby uniform water drops can be densely formed. When $\Delta T$ is 0°C or less, it is hard to fully grow the water drops densely, and the pores may have uneven shapes and sizes and will not be regularly arranged in the porous film 17. On the other hand, when $\Delta T$ is more than 10°C, the water drops may locally be multi-layered, that is, the water drops may be formed in three dimensional arrangement, and the pores may have uneven shapes and sizes and will not be regularly arranged in the porous film 17.

$$0^\circ C < \Delta T \leq 10^\circ C \quad \ldots (2)$$

It is preferable that the organic solvent is evaporated as much as possible from the casting film 22 while the water drops are being grown. When the surface temperature TS and the dew point TD are set within the above-described range in the second area 47, the organic solvent can be sufficiently evaporated while preventing abrupt evaporation of the organic solvent. Further, it is preferable that only the organic solvent is selectively evaporated without evaporating the water drops. In view of this, preferable organic solvent has a higher evaporation speed as compared to the water drops at the same temperature and pressure. Owing to this, it becomes easier for the water drops to enter inside the casting film 22 along with the evaporation of the organic solvent.

Four of air feeding/sucking units 71 to 74 are disposed in this order along the moving path of the casting film 22 in the third area 48. The number of the air feeding/sucking units is not limited to four that is adopted in this embodiment, but may be one or more and three or less, or five or more. Although the structure of each of the air feeding/sucking units 71 and 74 is the same as that of the air feeding/sucking unit 61, it is not limited thereto.

At least one of the surface temperature TS and the dew point TD is controlled so that the surface temperature TS and the dew point TD satisfy the following condition (3). The surface temperature TS is mainly controlled by a temperature control plate (not shown). The dew point TD can be controlled by adjusting the conditions of dry air fed from the outlet 71a. In the third area 48, the surface temperature TS of the casting film 22 can be measured by providing a thermometer like the one described above, near the casting film 22. When the conditions of the third area 48 are set as such, the water drops stop growing and are evaporated. If TS ≤ TD is met (if the surface temperature TS is equal to or lower than the dew point TD), condensation may further occur on the water drops, which may destroy the formed porous structure.

$$TS > TD \quad ...(3)$$

The main object to be achieved in the third area 48 is to evaporate the water drops. However, the organic solvent which has not been evaporated before reaching the third area 48 can also be evaporated here.

In the water drop evaporating step 15 performed in the third area 48, a reduced-pressure drying device or a so-called 2D nozzle can be used instead of the air feeding/sucking units 71 to 74. The reduced-pressure drying makes it easier to adjust the evaporation speeds of the organic solvent and the water drops respectively, which enhances the evaporation of both the organic solvent and the water drops. Owing to this, the water drops can be well formed inside the casting film 22. Accordingly, it is possible to form the pores 31 having controlled shapes and sizes at the positions where the water drops used to be. Note that the 2D nozzle has an air feeding nozzle member for feeding air and an air sucking nozzle member for sucking air around the casting film 22. The 2D nozzle preferably extends across the full width of the casting film 22 and is capable of uniformly feeding and sucking air. It is preferable that the temperature of the endless belt 51 is gradually increased from the first area 46 to the third area 48. Owing to this, the evaporation speed of the organic solvent is controlled, and the organic solvent can be efficiently evaporated without destroying the porous structure. The temperature is increased by preferably in the range between 0.005°C/sec or more to 3°C/sec or less.

The film production apparatus 41 further includes a peel roller 57. The peel roller 57 is used for peeling the casting film 22 from the endless belt 51 as the porous film 17 and for guiding the porous film 17 to the following steps such as, for example, a function imparting step for imparting various functions to the porous film 17, a winding step for winding the porous film 17 into a roll, and the like.

In the present invention, a feeding speed V1 for feeding the humidified air from the air feeding/sucking unit 61 is a relative speed to the moving speed of the casting film 22, which is, the moving speed of the endless belt 51. The feeding speed V1 is preferably in the range between 0. 02 m/sec or more to 2 m/sec or less, and more preferably in the range between 0.05 m/sec or more to 1 m/sec or less. If the feeding speed V1 is less than 0.02 m/sec, the casting film 22 may be introduced to the third area 48 before the water drops are formed to be densely arranged. In contrast, if the air feeding speed V1 is more than 2 m/sec, an exposed surface of the casting film 22 may become rough or the condensation may not proceed sufficiently. In addition, the wind direction and the wind speed of the humidified air are preferably uniform as much as possible along the width direction of the endless belt 51. Note that the feeding speeds of the humidified air from the air feeding/sucking units 63 and 64 may be V1.

In the present invention, the solution 11 including the polymer as the material and the plasticizer is used to form the porous film 17. Therefore, the porous film 17 obtained according to the present invention is flexible and easy to be handled. In addition, the casting film 22 can be peeled from the endless belt 51 with hardly leaving the casting film 22 thereon, and thereby improving efficiency in producing the porous film 17. Further, the cellulose acylate has high hydrophilic property, which enhances the formation of the water drops on the casting film 22. When the wind speed of the humidified air is maintained within the above described range, the water drop forming step 13 can be performed while preventing the excess condensation on the casting film 22. As a result, the porous film 17 can be efficiently produced.

At the downstream end of each first area 46, second area 47, third area 48 near a convey path of the endless

belt 51 is provided with a detection device (not shown) for detecting a form of the casting film 22. Based on the detection results of these detection devices, the above described blower controller (not shown) and the temperature controller 54 are controlled. As the detection device, a microscope having an image sensor for observing the exposed surface of the casting film 22, a laser diffraction device having a light source for emitting a laser beam to the casting film 22 and an analyzing section for analyzing a diffraction status of the emitted laser beam, or the like may be used. When using the microscope, the size of each water drop, variation level in sizes of the water drops, the number of the water drops, the spaces between the water drops, arrangement condition of the water drops, the degree or depth of the water drops got in to the casting film 22, and the like are observed. When using the laser diffraction device, laser beam is emitted to the casting film 22 from the light source, and the size of each water drop, variation level in sizes of the water drops, the density of the water drops, arrangement condition of the water drops, the degree or depth of the water drops got in to the casting film 22, and the like are obtained from a diffraction spot of the laser beam.

When the form of the casting film is detected by the detection devices, the air feeding and air sucking conditions of the air feeding/sucking unit 61, 63, 64, and 71 to 72 are individually controlled by the blower controller, and the surface temperatures of the rollers 52 and 53 are individually controlled by the temperature controller 54.

When the result of the detection device provided at the downstream end of the first area 46 corresponds to at least one of the following conditions (X1) to (X4), at least one of the following procedures (Xa) to (Xc) is preferably performed. Note that a "predetermined value" in the following conditions (X1) to (X3) may be set as a form of range.

(X1) The size of the water drop is larger than a predetermined value.
(X2) The number of water drops is larger than a predetermined value.
(X3) The density of the water drops is larger than a predetermined value.
(X4) More than one small water drops and water drops having twice a size of the small water drop are mixed.
(Xa) Lower the wind speed of the humidified air such that the relative speed of the humidified air from the outlet 61a to (the moving speed of) the endless belt 51 becomes small.
(Xb) Decrease the flow amount of the humidified air from the outlet 61a.
(Xc) Raise the temperatures of the rollers 52 and 53 or lower the humidity of the humidified air from the outlet 61a so that the value $\Delta T$ in the first area 46 becomes small.

Meanwhile, when the result of the detection device provided at the downstream end of the first area 46 corresponds to at least one of the following conditions (Y1) to (Y3), at least one of the following procedures (Ya) to (Yc) is preferably performed. Note that a "predetermined value" in the following conditions (Y1) to (Y3) may be set as a form of range.

(Y1) The size of the water drop is smaller than a predetermined value.
(Y2) The number of water drops is smaller than a predetermined value.
(Y3) The density of the water drops is smaller than a predetermined value.
(Ya) Raise the wind speed of the humidified air such that the relative speed of the humidified air from the outlet 61a to (the moving speed of) the endless belt 51 becomes large.
(Yb) Increase the flow amount of the humidified air from the outlet 61a.
(Yc) Lower the temperatures of the rollers 52 and 53 or raise the humidity of the humidified air from the outlet 61a so that the value $\Delta T$ in the first area 46 becomes large.

In the first area 46, the procedures (Xa) to (Xc) are performed in cases of (X1) to (X4), and the procedures (Ya) to (Yc) are performed in cases of (Y1) to (Y3). As well, in the second area 47 and the third area 48, the value $\Delta T$ and/or the conditions of the humidified air and the ambient air are adjusted in accordance with the forms of the water drops and the casting film. When the water drops are grown faster than the predetermined speed or the evaporation speed of the water drops is larger than the predetermined value, the wind speed of each humidified air and ambient air is lowered or the flow amount of the same is decreased so that the value $\Delta T$ is made small. In contrast, when the water drops area grown slower than the predetermined speed or the evaporation speed of the water drops is smaller than the predetermined value, basically, the wind speed of each humidified air and ambient air is increased or the flow amount of the same is increased so that the value $\Delta T$ is made large.

According to the chemical structure and amount of the plasticizer used, the generation or formation condition of the water drops and the growth condition of the generated water drops vary. When the production method in which the blower controller and the temperature controller 54 are controlled using the detection devices is performed in accordance with the type and additive amount of the used plasticizer, the generation and growth of the water drops, the evaporation of the solvent, and the evaporation of the water drops can be precisely controlled, so that various types of plasticizers can be used as a component of the porous film.

In this embodiment, the solution 11 is continuously cast on the endless belt 51 to form the long porous film 17.

However, the present invention is not limited to this. For example, a case where the solution 11 is intermittently cast to sequentially form sheets of porous film is also included to the present invention. Fig. 9 schematically shows a film production apparatus according to a second embodiment of the present invention. Note that components and devices same as the above described components and devices are denoted by same numerals.

A film production apparatus 101 for producing sheets of porous film includes a first area 111 in which a casting film 106 is formed by casting the solution 11 on a support 105 and water drops are formed on the casting film 106 by condensation, a second area 112 in which the water drops are grown on the casting film 106 while evaporating the organic solvent contained in the casting film 106, a third area 113 in which the water drops area evaporated, and a convey belt 115 for conveying the support 105 through the first area 111 to the third area 113 in this order. The support 105 is introduced to the first area 111 by the convey belt 115.

The casting die 56 casts the solution 11 on the support 105 passing through the first area 111. The casting film 106 is formed from the solution 11 on the support 105. The air feeding/sucking unit 61 applies the humidified air with the feeding speed of V1 to the casting film 106 passing through the first area 111. Owing to the humidified air from the air feeding/sucking unit 61, condensation occurs, which generates water drops on the casting film 106. After that, the casting film 106 having the water drops formed thereon is introduced to the second area 112 along with the support 105 by the convey belt 115. The air feeding/sucking units 63 and 64 apply the humidified air to the casting film 106 passing through the second area 112. Owing to the humidified air from the air feeding/sucking units 63 and 64, the water drops on the casting film 106 are grown. After that, the casting film 106 with the water drops grown to a desired size and entered inside thereof is introduced to the third area 113 by the convey belt 115. The air feeding/sucking units 71 and 73 apply the dry air to the casting film 106 passing through the third area 113. Owing to the dry air from the air feeding/sucking units 71 to 73, the water drops inside or on the surface of the casting film 106 are evaporated. The casting film 106 which has passed the third area 113 is peeled from the support 105, and thereby obtaining the porous film. Thus respective steps are performed in the first area 111 to the third area 113 on the support 105 basis and the supports 105 are intermittently conveyed, and thereby producing sheets of the porous film.

It is also possible to arrange more than one casting die, which has smaller width than a width of the casting die 56, in a width direction of the support to form casting films with smaller widths. Further, a plurality of smaller casting films may be formed on the support by conveying the support intermittently with shorter time interval in the casting step. It is also possible to use a casting die whose opening for casting the solution is divided into plural sections in the width direction. When the solution 11 is intermittently cast using this casting die, strips of porous film can be produced one after another.

Fig. 10 schematically shows a film production apparatus 121 according to a third embodiment of the present invention. Note that components and devices same as those of the porous film production apparatuses 41 (see Fig. 8) and 101 (see Fig. 9), and explanations of their operations are omitted.

The film production apparatus 121 includes a first area 131 in which the solution 11 is cast using the casting die 56 onto a cellulose acylate film (hereinafter, referred to as a base film) 125 as a support to form a casting film 126 and water drops are formed on the casting film 126 by condensation, a second area 132 in which the water drops are grown on the casting film 126 while evaporating the organic solvent contained in the casting film 126, a third area 133 in which the water drops are evaporated, a feeding device 141 for storing the base film 125 wound into a roll and for sending this base film 125 to the first area 131, and a winding device 145 for winding a composite material 144 having the base film 125 and a porous film 127 formed in the third area 133 which is layered on the base film 125. The base film 125 is conveyed through the first area 131 to the third area 133 in this order by the feeding device 141 and the winding device 145.

The casting die 56 casts the solution 11 onto the base film 125 passing through the first area 131. The casting film 126 is formed from the solution 11 cast on the base film 125. Owing to the humidified air with the feeding speed of V1 fed from the air feeding/sucking unit 61, water drops are generated on the casting film 126. After that, the casting film 126 having the water drops formed thereon is introduced to the second area 132 along with the base film 125. Owing to the humidified air fed from the air feeding/sucking units 63 and 64, the water drops on the casting film 126 are grown. After that, the casting film 126 with the water drops entered inside thereof is introduced to the third area 133. Owing to the dry air fed from the air feeding/sucking units 71 to 73, the water drops inside or on the surface of the casting film 126 are evaporated. Pores are then formed in the casting film 126 due to the evaporation, and thereby forming the porous film 127 on the base film 125. The porous film 127 with pores is introduced to the winding device 145 by the running of the base film 125. The porous film 127 and the base film 125 are wound up as the thin film composite material 144 by the winding device 145.

As shown in Fig. 11, the thin film composite material 144 obtained in the film production apparatus 121 is composed of the base film 125 and the porous film 127 with pores. Pores 147 are formed on one surface of the composite material 144. The shapes of the pores 147 are same as the pores 31 described above, and a thickness L11 of the porous film 127 is same as the thickness L1 described above. A thickness L12 of the base film 125 is preferably not less than 10 $\mu$m and not more than 100 $\mu$m, and more preferably not less than 20 $\mu$m and not more than 60 $\mu$m.

The conventional porous films are brittle and cannot be handled with ease. In the present invention, the plasticizer is added to the porous film, and therefore the plasticity and ductility of the porous film is improved and the usability of the porous film is improved. When this porous film is layered on the base film with flexibility, the usability is further improved while maintaining the improvement of plasticity and ductility. Thus, according to the present invention, the porous film which is thick and easy to be handled, and the composite material having such porous film can be produced.

In producing the composite material 144 of thin film, the polymers as the materials of the base film 125 and the porous film 127 are preferably the same chemical compound. When the polymer as the material includes TAC or CAP, the composite material 144 may be used as the anti-reflection film.

According to the above described embodiment using the film production apparatus 41 shown in Fig. 8, the solution 11 is cast onto the endless belt 51 which is the long or elongated support to form the casting film 22 in the casting step 12. The present invention is not limited to this, but a rotating drum which rotates on an axis may be used as the support, and the solution 11 may be cast on a peripheral surface of the rotating drum.

In the casting step 12, the casting film 22 may be formed by drying the solution 11 on the support, or a casting film may be formed by cooling the solution 11 on the support, or a casting film may be formed by combining the drying and the cooling.

When the casting film is formed by cooling the solution 11 on the support, the water drop forming step 13 and the water drop growing step 14 may be performed on the cooled casting film 22, or may be performed when conveying the casting film 22, which has been peeled from the support, using a pin tenter or the like. The water drops in the water drop forming step 13 and the water drop growing step 14 are not limited to be of liquid, but may be of solid.

Industrial Applicability

According to the present invention, since the plasticizer is added to the porous film, the porous film has improved plasticity and ductility, and thereby improving the usability of the porous film. When this porous film is layered on the base film with flexibility, the usability is further improved while maintaining the improvement of plasticity and ductility. Thus, according to the present invention, the porous film which is thick and easy to be handled, and the composite material having such porous film can be produced. The present invention, therefore, enables the porous film and the composite material to be used on a curved surface, or to be combined with other flexible materials.

## Claims

**1.** A production method of a porous film comprising the steps of:

(A) casting a liquid (11) containing an organic solvent, a polymer and a plasticizer which is not less than 0.01 wt.% and not more than 50 wt. % of said polymer onto a support (21) to form a casting film (22);
(B) forming water drops (25) by condensing water vapor from ambient gas on a surface of said casting film (22);
(C) growing said water drops (25) and evaporating said organic solvent (26) contained in said casting film (22); and
(D) evaporating (27) said water drops (25) from said casting film (22) after said step C.

**2.** The production method of a porous film as defined in claim 1, wherein said polymer is cellulose triacetate or cellulose acetate propionate.

**3.** The production method of a porous film as defined in claim 2, wherein said plasticizer is one of a phosphate ester compound, a phthalate ester compound and a glycolic acid ester compound.

**4.** The production method of a porous film as defined in claim 3, wherein humidified air having a relative velocity to said casting film (22) of not less than 0.02 m/sec and not more than 2 m/sec is applied to said casting film (22) in said step B.

**5.** The production method of a porous film as defined in claim 4, wherein said step B is performed under the following condition: $3°C \leq \Delta T \leq 15°C$
where a dew point of air around said casting film (22) is defined as TD, a surface temperature of said casting film (22) is defined as TS, and a value obtained by subtracting TS from TD is defined as $\Delta T$.

**6.** The production method of a porous film as defined in claim 5, wherein said support (21) contains same polymer as said casting film (22) and forms a multilayer structure with a porous layer having pores formed on a surface thereof

after being subjected to said step D.

7. The production method of a porous film as defined in claim 5, wherein said casting (22) film after said step D is peeled from said support (21) as a porous film.

## Patentansprüche

1. Herstellungsverfahren für eine poröse Folie bzw. einen porösen Film, umfassend die Schritte:

   (A) Gießen einer Flüssigkeit (11), die ein organisches Lösungsmittel, ein Polymer und ein Plastifiziermittel enthält, welches nicht weniger als 0,01 Gew.% und nicht mehr als 50 Gew.% des Polymers ausmacht, auf einen Träger (21), um eine Gussfolie (22) zu bilden;
   (B) Bilden von Wassertropfen (25) durch Kondensieren von Wasserdampf aus Umgebungsgas auf einer Oberfläche der Gussfolie (22);
   (C) Wachsenlassen der Wassertropfen (25) und Verdampfen des organischen Lösungsmittels (26), das in der Gussfolie (22) enthalten ist; und
   (D) Verdampfen (27) der Wassertropfen (25) von der Gussfolie (22) nach dem Schritt C.

2. Herstellungsverfahren für eine poröse Folie gemäß Anspruch 1, worin das Polymer Cellulosetriacetat oder Celluloseacetatpropionat ist.

3. Herstellungsverfahren für eine poröse Folie gemäß Anspruch 2, worin das Plastifiziermittel eines von einer Phosphatesterverbindung, einer Phthalatesterverbindung und einer Glycolsäureesterverbindung ist.

4. Herstellungsverfahren für eine poröse Folie gemäß Anspruch 3, worin befeuchtete Luft mit einer relativen Geschwindigkeit gegenüber der Gussfolie (22) von nicht weniger als 0,02 m/sec und nicht mehr als 2 m/sec auf den Gussfilm (22) im Schritt B angewandt wird.

5. Herstellungsverfahren für eine poröse Folie gemäß Anspruch 4, worin der Schritt B unter der folgenden Bedingung durchgeführt wird: $3°C \leq \Delta T \leq 15°C$,
   worin der Taupunkt der Luft um den Gussfilm (22) als TD definiert ist, die Oberflächentemperatur des Gussfilms (22) als TS definiert ist, und der Wert, der erhalten wird durch Substrahieren von TS von TD, als $\Delta T$ definiert ist.

6. Herstellungsverfahren für eine poröse Folie gemäß Anspruch 5, worin der Träger (21) das gleiche Polymer wie die Gussfolie (22) enthält und eine Multischichtstruktur mit einer porösen Schicht, die auf einer Oberfläche hiervon gebildete Poren aufweist, bildet, nachdem der Schritt D durchgeführt wurde.

7. Herstellungsverfahren für eine poröse Folie gemäß Anspruch 5, worin die Gussfolie (22) nach dem Schritt D von dem Träger (21) als poröse Folie abgelöst wird.

## Revendications

1. Procédé de production d’un film poreux comprenant les étapes de :

   (A) coulage d’un liquide (11) contenant un solvant organique, un polymère et un plastifiant qui n’est pas inférieur à 0,01 % en poids et pas supérieur à 50 % en poids dudit polymère sur un support (21) pour former un film de coulée (22) ;
   (B) formation de gouttes d’eau (25) en condensant de la vapeur d’eau à partir d’un gaz ambiant sur une surface dudit film de coulée (22) ;
   (C) croissance desdites gouttes d’eau (25) et évaporation dudit solvant organique (26) contenu dans ledit film de coulée (22) ; et
   (D) évaporation (27) desdites gouttes d’eau (25) à partir dudit film de coulée (22) après ladite étape C.

2. Procédé de production d’un film poreux selon la revendication 1, dans lequel ledit polymère est du triacétate de cellulose ou du propionate d’acétate de cellulose.

3. Procédé de production d'un film poreux selon la revendication 2, dans lequel ledit plastifiant est l'un d'un composé d'ester de phosphate, d'un composé d'ester de phtalate et d'un composé d'ester d'acide glycolique.

4. Procédé de production d'un film poreux selon la revendication 3, dans lequel de l'air humidifié, ayant une vitesse relative par rapport audit film de coulée (22) non inférieure à 0,02 m/s et non supérieure à 2 m/s, est appliqué audit film de coulée (22) dans ladite étape B.

5. Procédé de production d'un film poreux selon la revendication 4, dans lequel ladite étape B est effectuée sous la condition suivante : 3 °C ≤ ΔT ≤ 15 °C
où un point de rosée de l'air autour dudit film de coulée (22) est défini par TD, une température de surface dudit film de coulée (22) est définie par TS, et une valeur obtenue en soustrayant TS de TD est définie par ΔT.

6. Procédé de production d'un film poreux selon la revendication 5, dans lequel ledit support (21) contient le même polymère que ledit film de coulée (22) et forme une structure à plusieurs couches avec une couche poreuse ayant des pores formés sur une surface de cette dernière après soumission à ladite étape D.

7. Procédé de production d'un film poreux selon la revendication 5, dans lequel ledit film de coulée (22) après ladite étape D est ôté dudit support (21) en tant que film poreux.

FIG. 1

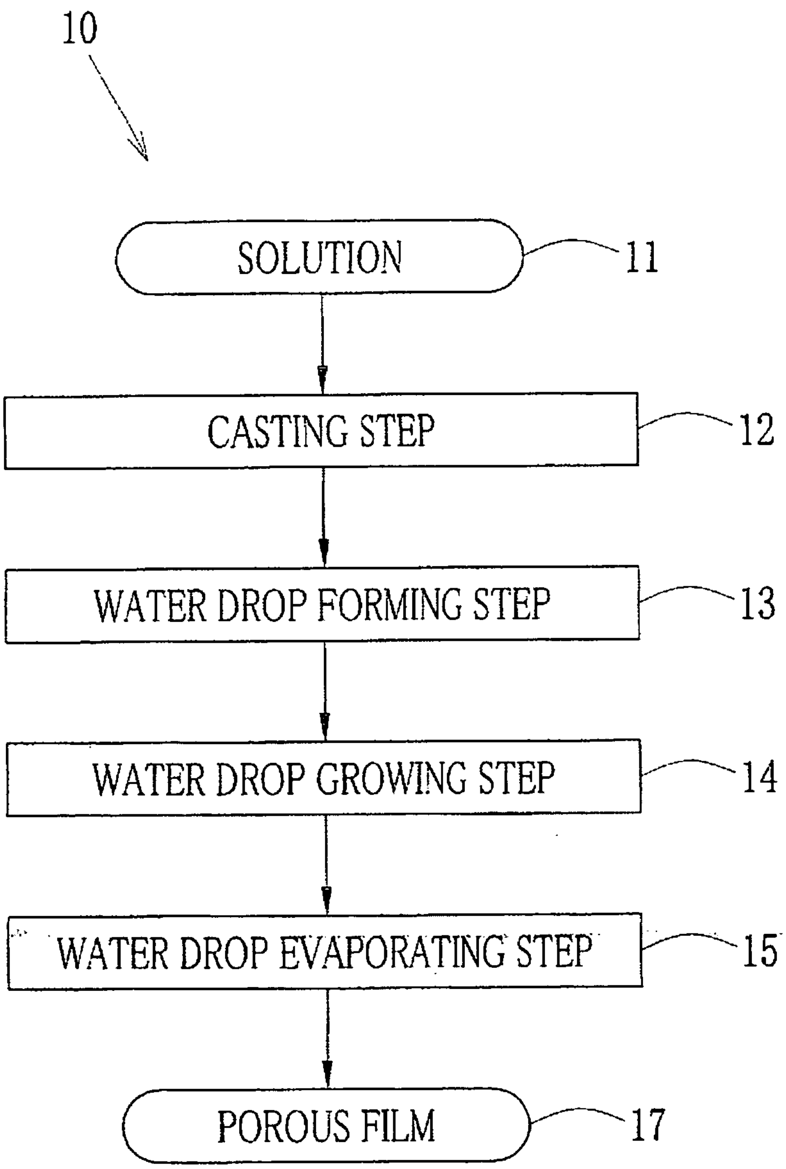
10
SOLUTION
11
CASTING STEP
12
WATER DROP FORMING STEP
13
WATER DROP GROWING STEP
14
WATER DROP EVAPORATING STEP
15
POROUS FILM
17

FIG. 2A

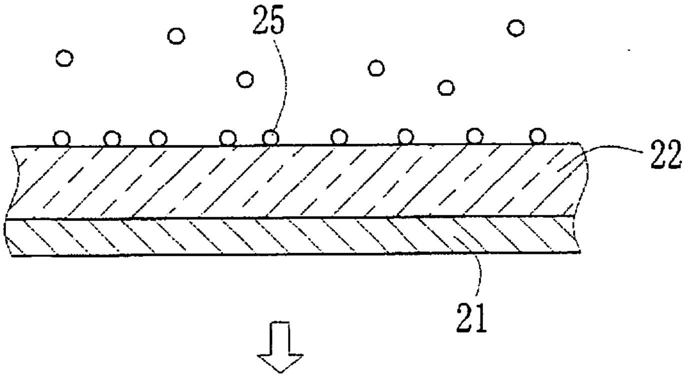


FIG. 2B

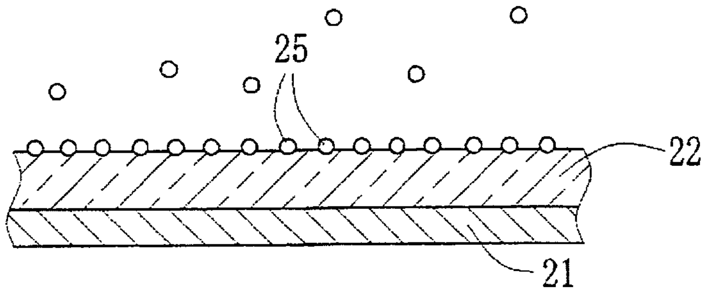


FIG. 2C

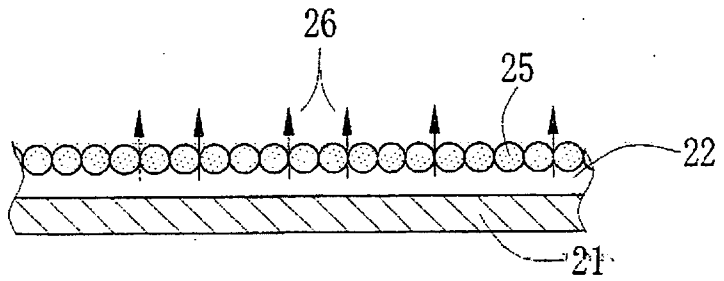


FIG. 2D

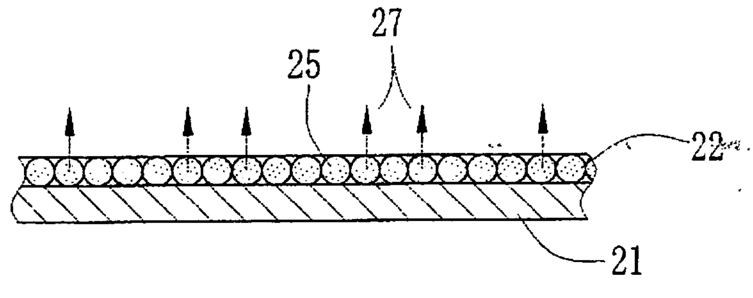

FIG. 3

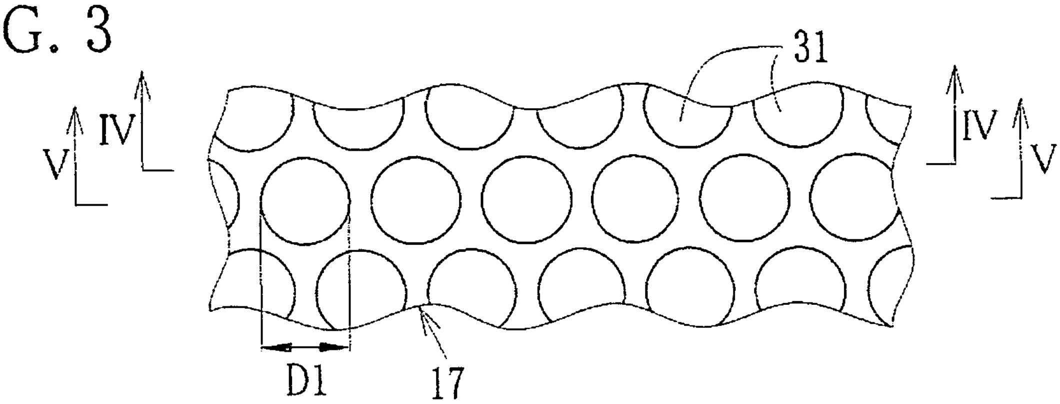


FIG. 4

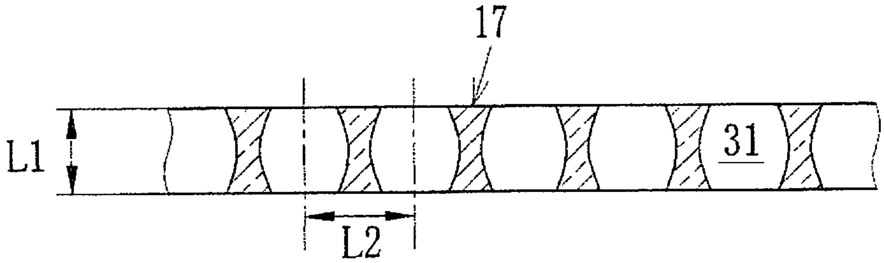


FIG. 5

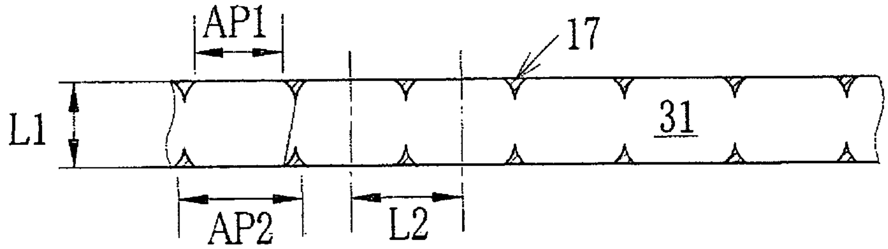


FIG. 6

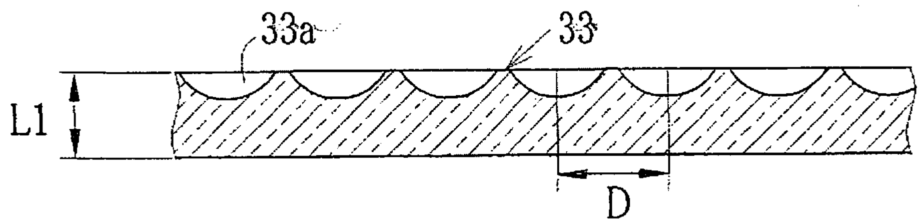


FIG. 7

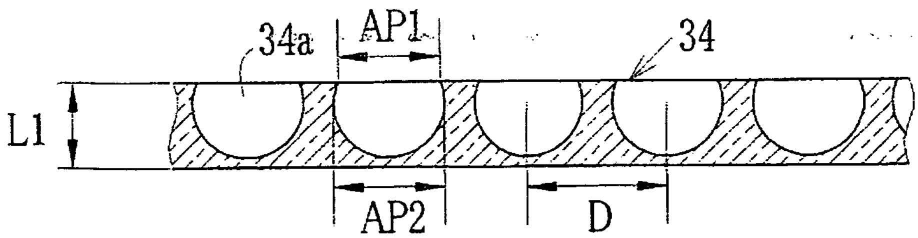

FIG. 8

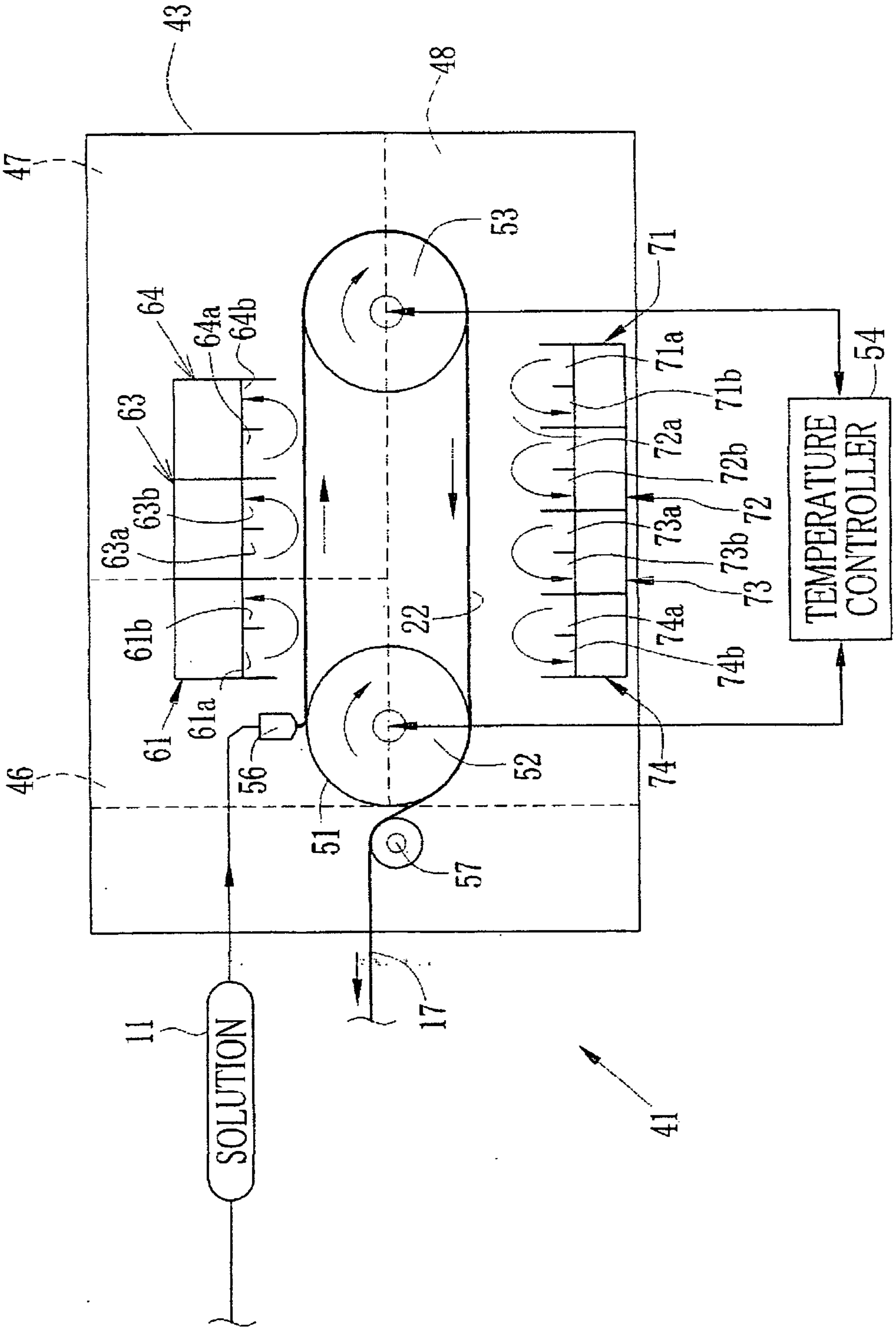
43
48
47
53
71
64
64a
64b
71a
63
71b
72a
63b
63a
72b
72
54
TEMPERATURE
CONTROLLER
73a
73b
73
61b
22
74a
74b
61
61a
56
52
74
46
51
57
17
11
SOLUTION
41

FIG. 9

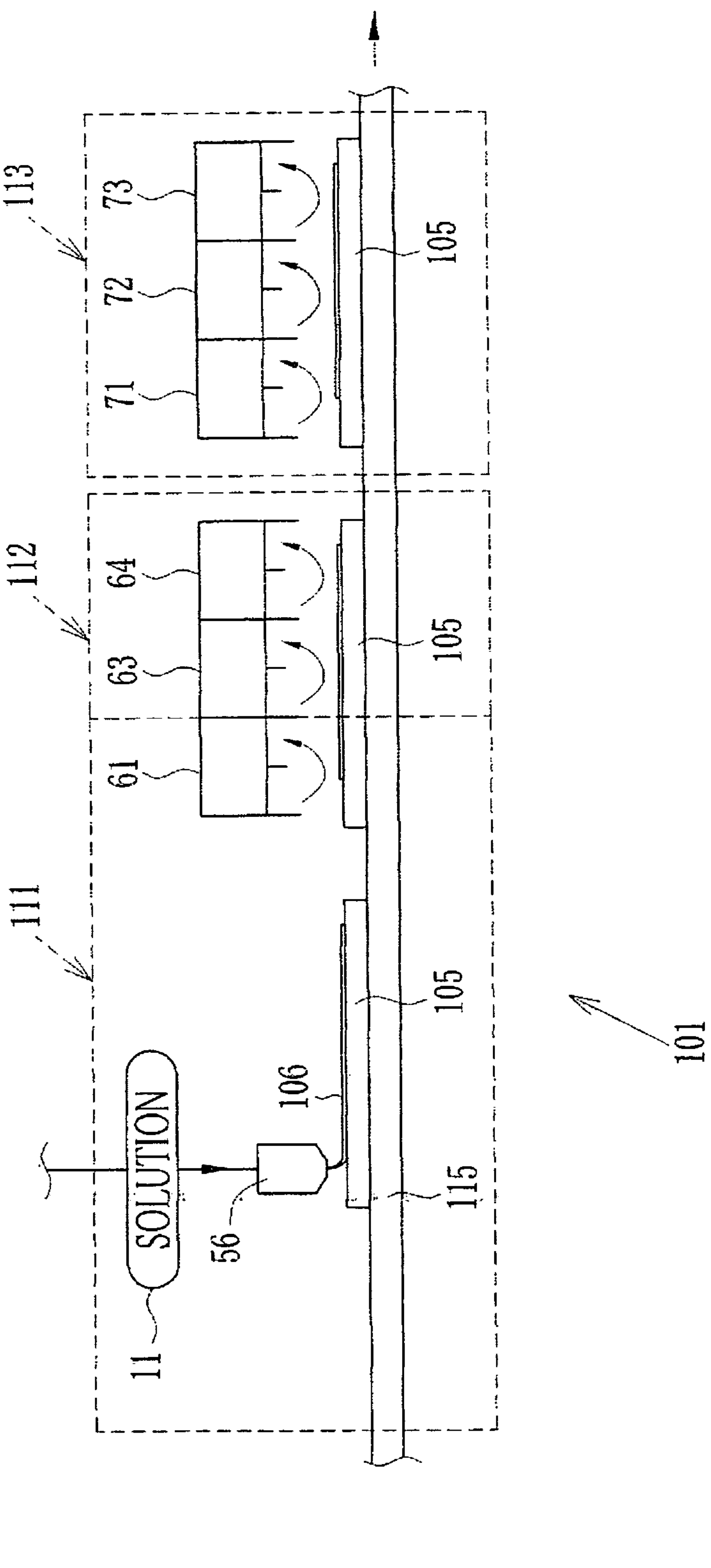

FIG. 10

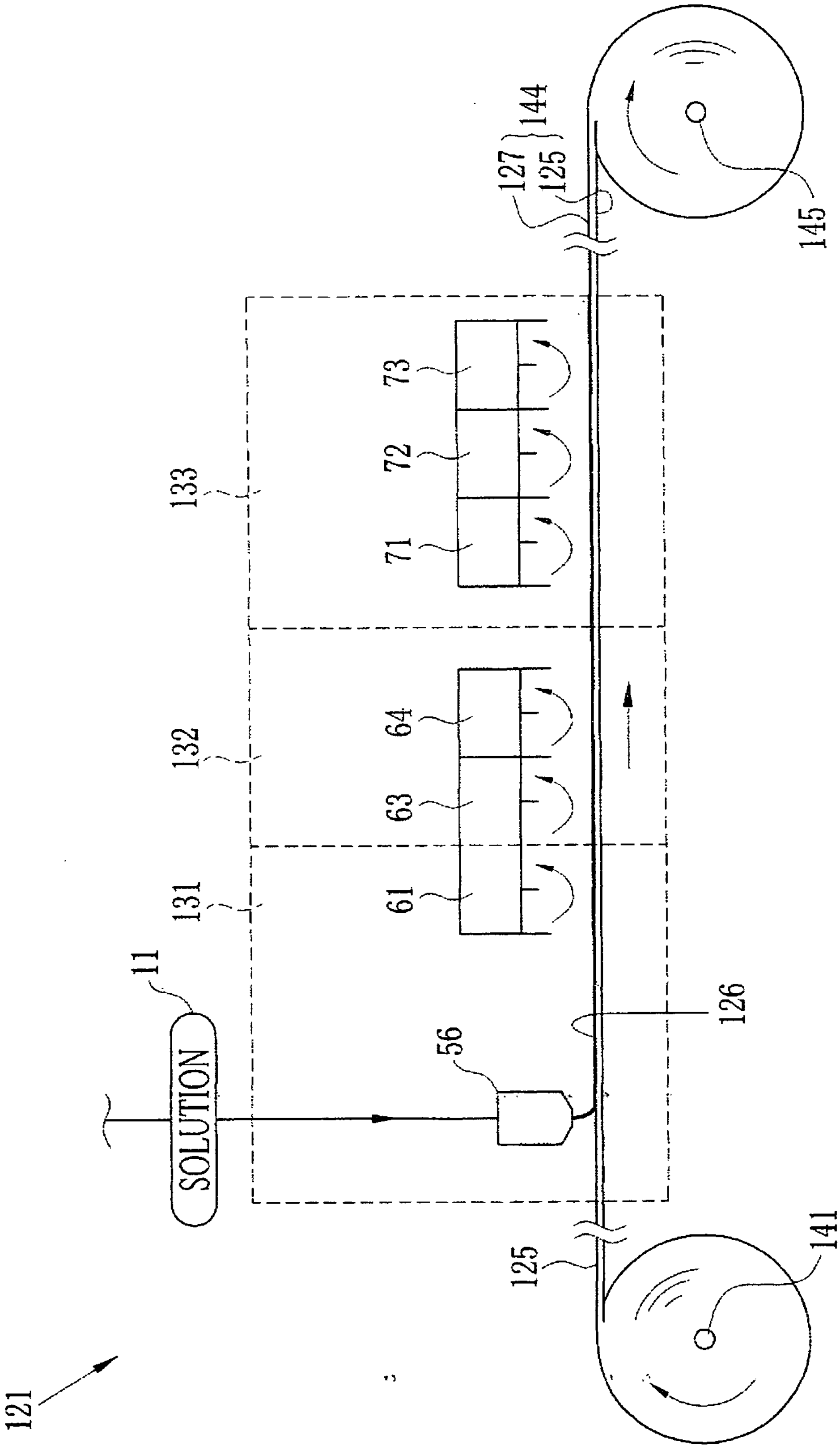
SOLUTION
11
56
126
131
132
133
61
63
64
71
72
73
125
127
144
145
141
121

FIG. 11

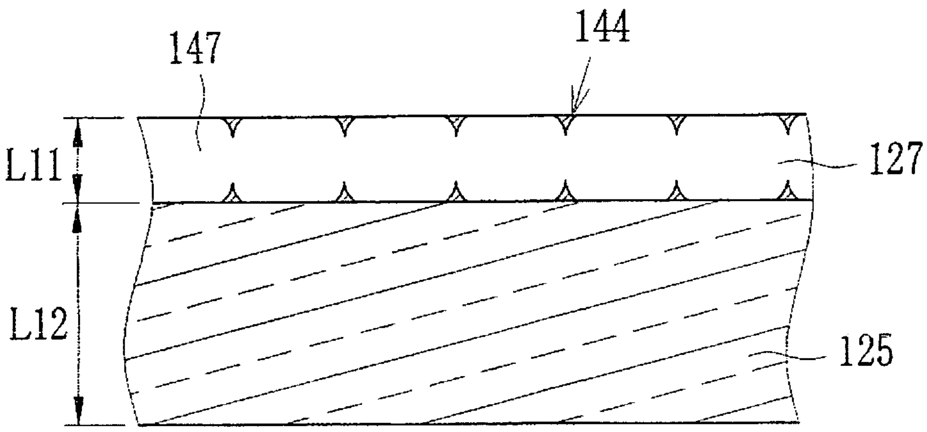

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002335949 A
- WO 2006030964 A
- JP 2007161943 A
- US 5308904 A
- GB 1440192 A